# EUROPÄISCHE PATENTSCHRIFT

(11) **EP 1 459 988 B1**
(45) Veröffentlichungstag und Bekanntmachung des Hinweises auf die Patenterteilung: **04.05.2011**
(21) Anmeldenummer: 04004653.4
(22) Anmeldetag: 01.03.2004
(51) Int. Cl.: B65B 65/00, B65B 61/26

(54) **Verfahren und System zum Kennzeichnen von Zigaretten-Verpackungseinheiten**
Method and apparatus for providing codes on cigarette pack units
Methode et dispositif pour fournir des codes sur les emballages

(30) Priorität: 17.03.2003 DE 10311621
(43) Veröffentlichungstag der Anmeldung: 22.09.2004
(73) Patentinhaber: British American Tobacco (Germany) GmbH, 20354 Hamburg (DE)
(72) Erfinder: Fuchs, Hans-Werner, 95349 Thurnau (DE); Prauka, Frank, 95445 Bayreuth (DE); Rabenstein, Bernd, 95500 Heinersreuth (DE)
(74) Vertreter: Schwabe - Sandmair - Marx

(56) Entgegenhaltungen:
- EP-A- 1 225 129
- WO-A-01/54986
- WO-A-02/04297
- DE-A- 10 004 022
- US-A- 5 362 949

## Beschreibung

Die Erfindung betrifft ein Verfahren und ein System zum Kennzeichnen von Zigaretten-Verpackungseinheiten mit einer Codierung in verschlüsselter Form.

Zur Produktverfolgung werden häufig Produkte mit Codes versehen, die es erlauben, die Vertriebswege nachzuvollziehen, Rückrufaktionen durchzuführen oder die Echtheit des Produkts nachzuweisen.

Auch in der Zigarettenindustrie müssen solche Codierungen vorgenommen werden, wobei jedoch aufgrund der Produktionsgeschwindigkeit von Zigarettenpackungen mit bis zu 800 Packungen pro Minute große technische Probleme auftreten. Um eine Codierung bei diesen extrem hohen Produktionsgeschwindigkeiten durchzuführen, muss ein erheblicher technischer Aufwand betrieben werden.

In der Vergangenheit wurden solche Informationen dem Folienabschnitt einer Zigarettenpackung aufgeprägt oder in anderer Weise auf diesen aufgebracht, so dass die Packung zum Lesen der Information geöffnet werden musste. Später wurden Verfahren bekannt, um Information auf der Außenseite der Zigarettenpackung aufzubringen, beispielsweise durch Tintenstrahldrucken oder Laserbeschriftung. Dabei besteht grundsätzlich die Anforderung, dass der Strom von Zigarettenpackungen während der Produktion möglichst nicht unterbrochen oder angehalten wird.

WO 01/54986 offenbart ein Verfahren und eine Anordnung zur Kennzeichnung von Zigarettenpackungen, wobei die Zigarettenpackungen auf einem Bandförderer aufliegen und an einem Kennzeichnungsmittel, beispielsweise einem Laser oder einem Druckwerk, vorbei geführt werden. Dabei ist die Kennzeichnung kryptografisch zusammengesetzt, so dass ein großer Archivierungs-Aufwand entsteht.

WO 02/04297 A1 offenbart eine Vorrichtung zur Kennzeichnung, bei der gegenüber liegende Seitenflächen der Zigarettenpackungen von zwei parallel verlaufenden Endlosbändern geklemmt und an einem Druckwerk vorbei geführt werden. Bedruckt werden können entweder nur von den Endlosbändern vorstehende Seitenabschnitte einer Zigarettenpackung oder nicht von den Förderbändern geklemmte Seitenflächen. Die Markierung von anderen Verpackungseinheiten wie Stangen, Gebinden etc. wird nicht erwähnt.

DE 100 04 022 A1 offenbart ein Verfahren und eine Vorrichtung zum Anbringen von Codierungen an Zigarettenpackungen, das bzw. die entweder vergleichbar zur WO 02/04297 A1 ausgebildet ist oder bei der Zigarettenpackungen in einem Trockenrevolver kreisgeführt und mit einem Laser beschriftet werden. Auch bei dieser Anordnung unterliegt die zur Kennzeichnung zur Verfügung stehende Fläche gerätebedingten Beschränkungen. Die Markierung anderer Verpackungseinheiten ist damit nicht möglich.

Die Anmelderin hat in der deutschen Patentanmeldung 102 21 837.4 ebenfalls ein Markierungssystem vorgeschlagen, das nur für Päckchen geeignet ist.

Dabei muss jedoch berücksichtigt werden, dass in der Zigarettenindustrie der Verpackungsablauf bis zum Versand in der Regel in vier Stufen verläuft, nämlich
1.) Zigaretten in die Zigarettenpackung, oft auch als _{"}Päckchen" bezeichnet,
2.) die fertige Zigarettenpackungen in Gebinde, oft auch als _{"}Stangen" bezeichnet,
3.) Gebinde in Kartons, und
4.) Kartons auf Palette.

Zur Produktverfolgung muss auf jeder Verpackungsstufe eine entsprechende Codierung mit Informationen für Hersteller und/oder Händler und/oder Kunden aufgebracht werden, beispielsweise über die Herstellungs-Zeit, das Herstellungs-Aggregat, die Herstellerfirma, ggf. die Echtheit, den Lieferverlauf oder auch den Verpackungsablauf.

Diese Markierungen können in Klarschrift oder verschlüsselt aufgebracht werden, so dass bereits die Archivierung der Vielzahl von anfallenden Codierdaten ein großes Problem darstellt. Denn bei der Herstellung von 800 Päckchen/min und damit 380.000 Päckchen pro Schicht und Vergabe einer Codierung für jedes Päckchen entstehen in kurzer Zeit riesige Datenmengen, deren Bewältigung auch im Computerzeitalter problematisch ist.

Der Erfindung liegt die Aufgabe zugrunde, ein Verfahren und ein System zum Kennzeichen von Zigaretten-Verpackungseinheiten mit einer Codierung zu schaffen, bei der die oben erwähnten Nachteile zumindest verringert werden. Insbesondere sollen ein Verfahren und ein System vorgeschlagen werden, mit denen sich die zu archivierenden Codierdaten-Mengen reduzieren lassen und trotzdem sichergestellt wird, dass der Vertriebsweg von der Zigarettenmaschine zumindest bis zum Erstkunden außerhalb des Herstellerunternehmens lückenlos nachgewiesen werden kann.

Dies wird für ein Verfahren durch die Merkmale des Anspruchs 1 und für ein System durch die Merkmale des Anspruchs 14 erreicht.

Zweckmäßige Ausführungsformen werden durch die zugehörigen Unteransprüche definiert.

Die mit der Erfindung erzielten Vorteile beruhen auf folgenden Überlegungen: In der Zigarettenindustrie muss jede auftretende Verpackungseinheit, also beispielsweise Zigarettenpackung, Gebinde, Karton und Palette, mit einer Codierung in verschlüsselter Form versehen werden. Erfindungsgemäß werden nun die verschiedenen Codierungsschritte so vorgenommen, dass jede Codierung auf einer Verpackungseinheit, zum Beispiel auf einem Gebinde, die Codierung zumindest einer von den kleineren, darin enthaltenen Verpackungseinheiten, in diesem Fall also aller Zigarettenpackungen, wiedergibt.

Damit ist die Codierung auf der jeweils eingesetzten, größten Verpackungseinheit, also beispielsweise einer Palette, eindeutig den Codierungen der Kartons, Gebinde oder Zigarettenpackungen zugeordnet, die sich auf dieser Palette befinden.

Zweckmäßig ist, alle Verpackungseinheiten so zu markieren, um einen eindeutigen Überblick zu erhalten.

Um die lückenlos identifizierende Codierung zu gewährleisten, muss das Aufbringen der Codierung auf die fertigen Verpackungseinheiten auf einem Weg und/oder an einer Stelle im Verpackungsablauf erfolgen, die gewährleisten, dass dem Markierungssystem beim Aufbringen der Codierung bekannt ist, welche kleinere Verpackungseinheiten gemeinsam in eine größere Verpackungseinheit gebracht werden, also beispielsweise welche Gebinde gemeinsam in einen Karton gepackt werden.

Aus diesem Grunde erfolgt die Codierung der Zigarettenpackungen erst kurz vor dem Gebindepacker, da an dieser Stelle ein kontinuierlicher Strom von einwandfreien Zigarettenpackungen vorhanden ist.

Andererseits werden die Zigarettenpackungen alleine, also ohne weitere, größere Verpackungseinheiten nicht in den Verkehr, also in den Handel, gebracht, so dass zumindest innerhalb einer vorgegebenen Zeitspanne die Zigarettenpackungen mit identischen Codierungen versehen werden können, die beispielsweise den Hersteller, das Herstellungsaggregat, also die Zigarettenmaschine, den zugehörigen Päckchenpacker, das Datum der Fertigung und den Zeitbereich für die Fertigung angeben.

In diesen Zeitbereichen können alle Päckchen, die von derselben Zigarettenmaschine und demselben Päckchenpacker kommen, mit einer identischen Codierung versehen werden.

In der Regel werden Einheiten von 10 Zigarettenpackungen mit jeweils identischen Codierungen in ein Gebinde, auch als _{"}Stange" bezeichnet, gepackt, wobei es sich anbietet, die gleiche Codierung auch für Gebinde zu verwenden, da einzelne Gebinde in der Regel nicht in den Handel gebracht werden. Insbesondere sollen nur ein Gebinde und die darin befindlichen Packungen die gleiche Codierung erhalten.

Damit lässt sich die Forderung der eindeutigen Zuordnung der Produkte zu einem Erstkunden auch erfüllen, wenn die gleiche Codierung für einen vorgegebenen Zeitraum sowohl für Zigarettenpackungen als auch für Gebinde verwendet wird, die mit diesen Zigarettenpackungen gefüllt sind, und die Rückverfolgbarkeit aller Zigarettenpäcken ist gewährleistet.

Die Kennzeichnung der Gebinde mit einer solchen Codierung erfolgt zweckmäßigerweise direkt am Gebindepacker.

Zwischen dem Gebindepacker und dem Kartonpacker ist im Allgemeinen ein Gebindespeicher als Puffer angeordnet, der häufig die Reihenfolge der Gebinde unter dem Gesichtspunkt _{"}last in-first out" umkehrt.

Da zusätzlich gelegentlich Gebinde aus dem kontinuierlichen Produktfluss für Qualitätskontrollen entnommen werden, wird direkt vor dem Kartonpacker ein Lesegerät vorgesehen, das die Codierung auf den Gebinden liest, die in einen einzigen Karton gepackt werden. Aus den eingelesenen Codierdaten von den Gebinden wird eine neue Karton-Codierung erstellt, die direkt im Kartonpacker aufgebracht wird und z.B. die Packungs-/Gebinde-Codierung und einen zusätzlichen Karton-Code enthält.

Um auch auf dieser Stufe die Archivierung der Codierdaten zu vereinfachen, ist es im Falle eines kontinuierlichen Stroms von nacheinander produzierten Gebinden, die in einen Karton verpackt werden, möglich, nur den Code des ersten und des letzten Gebindes zu archivieren, das in diesem Karton verpackt wird, d.h., als Datensatz, der aus den beiden Gebindecodes für das erste und das letzte Gebinde sowie dem zusätzlichen, speziellen Karton-Code besteht.

In den seltenen Fällen, in denen der kontinuierliche Fluss von nacheinander produzierten Gebinden unterbrochen worden ist, können entsprechend die kontinuierlich aufeinanderfolgenden Gebinde zu _{"}Intervallen" zusammengefasst und mit entsprechenden Codierungen versehen werden, wodurch sich selbst in diesem Fall die Archivierung vereinfachen lässt.

Ein entsprechendes Verfahren wird bei der Erstellung und Archivierung der Codierung für die Paletten durchgeführt.

Die Kennzeichnung der Verpackungseinheiten durch eine solche Markierung kann auf verschiedenen Wegen erfolgen, beispielsweise Bedrucken mittels eines Tintenstrahldruckers, eines Laserdruckers, der Laserabtragung, Prägegeräten etc., das Aufbringen von Aufklebern, Magnetbändern etc., in verschiedenen Gestaltungsformen wie Barcode, 2D-Code etc., zum Beispiel für Datum, Uhrzeit, Produktionsort, Produktionsaggregat etc. oder in verschlüsselter Form.

Die Codierung auf den Gebinden sowie auf den Kartons und den Paletten ist in maschinenlesbarer Form, beispielsweise durch Barcode oder 2D-Code, auch unter dem Gesichtspunkt, dass Paletten, aber auch Kartons von verschiedenen Vertriebsorganisationen außerhalb des Herstellungsuntemehmens gehandhabt werden müssen und deshalb die codierte Informationen automatisch abgefragt werden müssen.

Die Codierung auf den Zigarettenpackungen kann auf das Cellophan erfolgen, beispielsweise durch einen Tintenstrahldrucker, oder durch das Cellophan hindurch auf das Material der Zigarettenpackung selbst, beispielsweise durch eine Laserbeschriftung.

Bei der Beschriftung auf dem Cellophan ist es möglich, sichtbare Farbe zu verwenden oder aber Spezialfarben, die erst bei einer Spezialbehandlung, zum Beispiel unter UV-Licht, sichtbar wird.

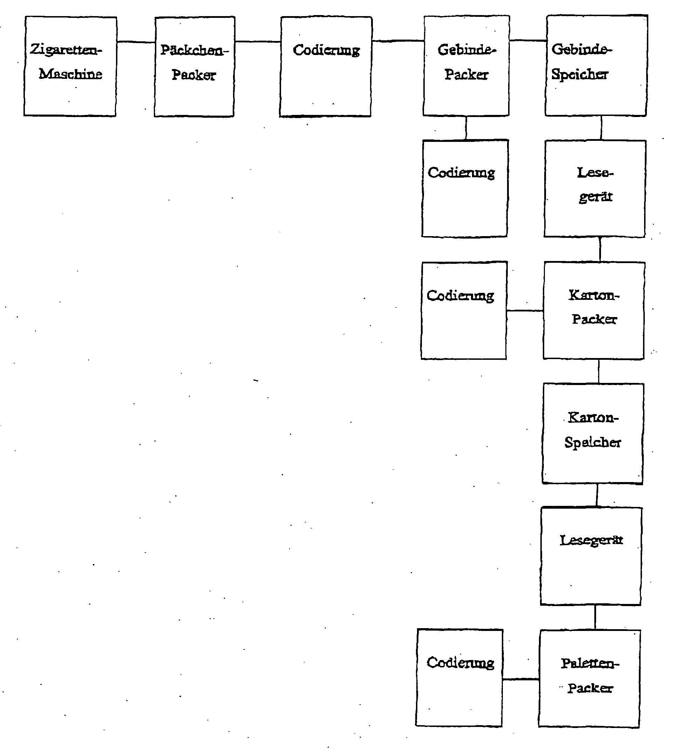

Die Erfindung wird im Folgenden anhand eines Ausführungsbeispiels unter Bezugnahme auf die beiliegende, schematische Zeichnungen näher erläutert, deren einzige Figur ein Flussschema einer Anlage zur Herstellung und Verpackung von Zigaretten sowie zur Markierung der verschiedenen Verpackungseinheiten zeigt.

Die von einer Zigarettenmaschine hergestellten Zigaretten werden auf übliche Weise als kontinuierlicher Strom einem Päckchenpacker zugeführt, der sie in die kleinste Verpackungseinheit, nämlich eine Zigarettenpackung, verpackt.

Diese Zigarettenpackungen werden einer sorgfältigen Qualitätskontrolle unterworfen, und erst im Anschluss an diese Qualitätskontrolle werden die Zigarettenpackungen mit der Codierung versehen, die auf die Folie der Zigarettenpackung aufgebracht wird. Die Codierung besteht z.B. aus einer Kennziffer für den Herstellungsort, einer Kennziffer für die Zigarettenmaschine, z.B. 07, einer Kennziffer für den Päckchenpacker, z.B. 05, sowie der Produktionszeit und ggf. einem Echtheitskennzeichen.

Da die Zigarettenpackungen einer strengen Qualitätskontrolle unterworfen werden, kommt es relativ häufig zum Auswurf von Packungen, so dass die Markierung der Zigarettenpackungen erst kurz vor dem folgenden Gebinde- oder Stangenpacker erfolgt.

Alle Zigarettenpackungen, die in einem bestimmten Zeitraum, z.B. 10 Sekunden oder 1 Minute von dieser einen Zigarettenmaschine hergestellt und von diesem einen Päckchenverpacker verpackt werden, erhalten die gleiche Codierung. Insbesondere erhalten nur die Packungen die gleiche Codierung, für die sichergestellt ist, dass sie in das gleiche Gebinde gepackt werden.

Diese Zigarettenpackungen werden anschließend in Gebinde verpackt, die ebenfalls durch eine Codierung markiert werden. Dabei wird insbesondere dieselbe Codierung wie bei den Zigarettenpackungen verwendet, die sich in diesem Gebinde befinden.

Es wird eine maschinenlesbare Codierung, zum Beispiel ein Barcode, eingesetzt, die direkt im Gebindepacker aufgebracht wird.

Die einzelnen Gebinde gelangen von dem Gebindepacker zu einem Gebindespeicher, der als Puffer dient und in vielen Fällen die Reihenfolge der Gebinde umkehrt (last in-first out). Außerdem werden manchmal Gebinde aus dem kontinuierlichen Fluss der Produktion für Qualitätskontrollen entnommen, so dass keine kontinuierliche, ununterbrochene Reihenfolge der Gebinde gewährleistet ist.

Aus diesem Grunde befindet sich vor dem anschließenden Kartonpacker ein Lesegerät, das die Codierung auf den vorbeilaufenden Gebinden liest, die in einen einzigen Karton verpackt werden. Aus den eingelesenen Codierdaten der Gebinde für diesen Karton wird dann ein Kartondatensatz sowie eine Codierung für den Karton erstellt, die in maschinenlesbarer Form direkt in dem Kartonpacker aufgebracht wird. Diese Codierung setzt sich aus den Päckchen-/Gebinde-Codes aller Gebinde im Karton und einem zusätzlichen Karton-Code, z.B. 1500 zusammen, der den Kartonpacker und/oder anderen Informationen angibt.

Werden, wie erwähnt, alle Gebinde, die in einer Zeiteinheit hergestellt werden, mit der gleichen Codierung versehen, so kann als Karton-Codierung die Gebinde-Codierung in Verbindung mit einem zusätzlichen Karton-Code verwendet werden, so dass für jeden Karton nur ein solcher Datensatz, bestehend aus den Gebinde-Codes des ersten und des letzten Gebindes und dem dazugehörigen Karton-Code, abgespeichert werden muss.

In den seltenen Fällen, in denen der kontinuierliche Fluss von nacheinander produzierten Gebinden unterbrochen wird, kann man die aufeinanderfolgenden Gebinde zu _{"}strings" zusammenfassen und entsprechend codieren, wodurch sich ebenfalls eine Reduzierung des Archivierungsaufwandes ergibt.

Es erfolgt also eine Art _{"}Lauflängen-Kompression".

Ein entsprechendes Verfahren kann auch bei der Codierung der Paletten durchgeführt werden, die direkt an dem Palettenpacker erfolgt.

Falls hier ebenfalls ein Kartonspeicher als Puffer eingesetzt wird, muss ebenfalls wieder ein Lesegerät unmittelbar vor dem Palettenpacker installiert werden, das die Codierung auf den Kartons liest, die in eine Palette eingepackt werden sollen.

Die Paletten-Codierung besteht aus der Karton-Codierung und einem zusätzlichen Paletten-Code.

Auch hier kann auf die oben beschriebene Weise die Archivierung der Codierung vereinfacht werden.

Obwohl gemäß der obigen Erläuterung die Codierungen der kleinen Verpackungseinheiten identisch in den Codierungen der größeren Verpackungseinheiten enthalten sind, ist dies nicht unbedingt erforderlich, sondern es können auch Verschlüsselungen vorgenommen werden. Wichtig ist nur, dass man aus einer Codierung einer Verpackungseinheit die Codierungen der darin enthaltenen Verpackungseinheiten ableiten kann.

## Patentansprüche

1. Verfahren zum Kennzeichnen von Zigaretten-Verpackungseinheiten mit einer Codierung in verschlüsselter Form, **dadurch gekennzeichnet, dass** auf jeder Verpackungsstufe eine Codierung aufgebracht wird, wobei jede Codierung auf einer Verpackungseinheit (z.B. einem Karton) die Codierung zumindest einer von den kleineren, darin enthaltenen Verpackungseinheiten (z.B. Gebinde oder Zigarettenpackungen) wiedergibt.

2. Verfahren nach Anspruch 1, **dadurch gekennzeichnet, dass** jede Codierung zumindest den Typ von kleineren Verpackungseinheiten wiedergibt.

3. Verfahren nach Anspruch 1 oder 2, **dadurch gekennzeichnet, dass** die Codierung auf einer Verpackungseinheit die Codierung jeder kleineren, darin enthaltenen Verpackungseinheit wiedergibt.

4. Verfahren nach einem der Ansprüche 1 bis 3, **dadurch gekennzeichnet, dass** die Codierung der Verpackungseinheiten an einer Stelle erfolgt, an der die Codierung alle Verpackungseinheiten berücksichtigt, die zu einer größeren Verpackungseinheit zusammengestellt werden.

5. Verfahren nach Anspruch 4, **dadurch gekennzeichnet, dass** die Codierung auf die Zigarettenpackungen unmittelbar vor dem Gebindepacker, also nach Durchführung der Qualitätskontrolle für die Zigarettenpackungen, aufgebracht wird.

6. Verfahren nach einem der Ansprüche 1 bis 5, **dadurch gekennzeichnet, dass** alle Zigarettenpackungen, die innerhalb einer vorgegebenen Zeiteinheit, insbesondere der Zeiteinheit, die nötig ist, um die Päckchen für ein Gebinde zu produzieren, von derselben Zigarettenmaschine und demselben Päckchenpacker geliefert werden, mit der gleichen Codierung versehen werden.

7. Verfahren nach Anspruch 6, **dadurch gekennzeichnet, dass** die Gebinde mit der gleichen Codierung wie die in ihnen enthaltenen Zigarettenpackungen versehen werden.

8. Verfahren nach einem der Ansprüche 1 bis 7, **dadurch gekennzeichnet, dass** die Codierung auf die Gebinde direkt am Gebindepacker aufgebracht wird.

9. Verfahren nach einem der Ansprüche 1 bis 8, **dadurch gekennzeichnet, dass** die Codierung der dem Kartonpacker zugeführten Gebinde erfasst und zur Zusammenstellung der Karton-Codierung benutzt wird.

10. Verfahren nach Anspruch 9, **dadurch gekennzeichnet, dass** der Karton-Datensatz aus der Gebinde-Codierung und einem Karton-Code besteht.

11. Verfahren nach einem der Ansprüche 1 bis 10, **dadurch gekennzeichnet, dass** die Codierungen der auf einer Palette zusammengefassten Kartons erfasst und zu der Paletten-Codierung zusammengestellt werden.

12. Verfahren nach einem der Ansprüche 9 bis 11, **dadurch gekennzeichnet, dass** bei lückenlos aufeinanderfolgenden Verpackungseinheiten die Codierungen komprimiert archiviert werden, insbesondere nach einer Art Lauflängen-Kompression.

13. Verfahren nach Anspruch 12, **dadurch gekennzeichnet, dass** nur die Codes der ersten und der letzten Verpackungseinheit archiviert werden.

14. System zum Kennzeichnen von Zigaretten-Verpackungseinheiten mit einer Codierung in verschlüsselter Form, **gekennzeichnet durch** eine
Anordnung zur Bildung jeder Codierung für eine Verpackungseinheit (z.B. Karton) in der Weise, dass die Codierung eine Codierung zumindest einer kleineren, in der Verpackungseinheit enthaltenen Verpackungseinheit (Zigarettenpackung und/oder Gebinde) wiedergibt, und einer
Anordnung zum Aufbringen einer Codierung auf jeder Verpackungsstufe.

15. System nach Anspruch 14, **dadurch gekennzeichnet, dass** die Vorrichtung zur Aufbringung der Codierung auf die Packungen direkt vor dem Gebindepacker angeordnet ist.

16. System nach einem der Ansprüche 14 und 15, **dadurch gekennzeichnet, dass** vor dem Kartonpacker ein Lesegerät für die Gebinde-Codierungen angeordnet ist.

17. System nach einem der Ansprüche 14 bis 16, **dadurch gekennzeichnet, dass** vor dem Palettenpacker ein Lesegerät für die Karton-Codierungen angeordnet ist.

## Claims

1. A method for marking cigarette packaging units with an encrypted coding, **characterised in that** a coding is applied at each packaging stage, wherein each coding on a packaging unit (for example, a cardboard box) represents the coding of at least one of the smaller packaging units (for example, cartons or cigarette packets) contained therein.

2. The method according to claim 1, **characterised in that** each coding represents at least the type of smaller packaging units.

3. The method according to claim 1 or 2, **characterised in that** the coding on a packaging unit represents the coding of each smaller packaging unit contained therein.

4. The method according to any one of claims 1 to 3, **characterised in that** the packaging units are coded at a point at which the coding takes into account all the packaging units which are combined to form a larger packaging unit.

5. The method according to claim 4, **characterised in that** the coding is applied to the cigarette packets immediately upstream of the carton packer, i.e. after quality control has been performed on the cigarette packets.

6. The method according to any one of claims 1 to 5, **characterised in that** all the cigarette packets which are delivered by the same cigarette machine and the same packet packer within a predetermined unit of time, in particular the unit of time necessary in order to produce the packets for a carton, are provided with the same coding.

7. The method according to claim 6, **characterised in that** the cartons are provided with the same coding as the cigarette packets contained in them.

8. The method according to any one of claims 1 to 7, **characterised in that** the coding is applied to the cartons directly at the carton packer.

9. The method according to any one of claims 1 to 8, **characterised in that** the coding of the cartons which are fed to the cardboard box packer are detected and used to compile the cardboard box coding.

10. The method according to claim 9, **characterised in that** the cardboard box dataset consists of the carton coding and a cardboard box code.

11. The method according to any one of claims 1 to 10, **characterised in that** the codings of the cardboard boxes which are collected on a pallet are detected and combined to form the pallet coding.

12. The method according to any one of claims 9 to 11, **characterised in that** if packaging units are consecutive without gaps, the codings are archived in a compressed form, in particular in the manner of a run-length compression.

13. The method according to claim 12, **characterised in that** only the codes of the first and last packaging unit are archived.

14. A system for marking cigarette packaging units with an encrypted coding, **characterised by**:
an arrangement for forming each coding for a packaging unit (for example, a cardboard box) such that the coding represents a coding of at least one smaller packaging unit (cigarette packet and/or carton) contained in the packaging unit; and
an arrangement for applying a coding at each packaging stage.

15. The system according to claim 14, **characterised in that** the device for applying the coding to the packets is arranged directly upstream of the carton packer.

16. The system according to any one of claims 14 to 15, **characterised in that** a reading device for the carton codings is arranged upstream of the cardboard box packer.

17. The system according to any one of claims 14 to 16, **characterised in that** a reading device for the cardboard box codings is arranged upstream of the pallet packer.

## Revendications

1. Procédé de marquage d'unités d'emballage de cigarettes avec un codage sous forme cryptée, **caractérisé en ce qu'**un codage est appliqué à chaque étape d'emballage, chaque codage sur une unité d'emballage (par exemple, un carton) reproduisant le codage d'au moins une des unités d'emballage plus petites (par exemple, des cartouches ou paquets de cigarettes) contenues dans ladite unité d'emballage.

2. Procédé selon la revendication 1, **caractérisé en ce que** chaque codage reproduit au moins le type des unités d'emballage plus petites.

3. Procédé selon la revendication 1 ou 2, **caractérisé en ce que** le codage sur une unité d'emballage reproduit le codage de chaque unité d'emballage plus petite contenue dans cette dernière.

4. Procédé selon l'une quelconque des revendications 1 à 3, **caractérisé en ce que** le codage des unités d'emballage est effectué à un emplacement auquel est pris en compte le codage de toutes les unités d'emballage qui peuvent être regroupées pour former une unité d'emballage plus grande.

5. Procédé selon la revendication 4, **caractérisé en ce que** le codage sur les paquets de cigarettes a été appliqué directement en amont de l'empaqueteuse de cartouches, c'est-à-dire après la mise en oeuvre du contrôle qualité pour les paquets de cigarettes.

6. Procédé selon l'une quelconque des revendications 1 à 5, **caractérisé en ce que** le même codage est appliqué sur tous les paquets de cigarettes qui, pendant une unité de temps prédéfinie, en particulier l'unité de temps nécessaire pour produire des paquets pour une cartouche, sont fournis par la même machine à cigarettes et la même empaqueteuse de paquets.

7. Procédé selon la revendication 6, **caractérisé en ce que** les cartouches sont munies du même codage que les paquets de cigarettes contenus dans celles-ci.

8. Procédé selon l'une quelconque des revendications 1 à 7, **caractérisé en ce que** le codage est appliqué sur la cartouche, directement au niveau de l'empaqueteuse de cartouches.

9. Procédé selon l'une quelconque des revendications 1 à 8, **caractérisé en ce que** le codage de la cartouche acheminée vers l'empaqueteuse de cartons est enregistré et est utilisé pour composer le codage du carton.

10. Procédé selon la revendication 9, **caractérisé en ce que** l'enregistrement du carton est formé par le codage de la cartouche et un code du carton.

11. Procédé selon l'une quelconque des revendications 1 à 10, **caractérisé en ce que** les codages des cartons regroupés sur une palette sont enregistrés et regroupés pour le codage des palettes.

12. Procédé selon l'une quelconque des revendications 9 à 11, **caractérisé en ce qu'**en présence d'unités d'emballage se succédant en continu, les codages sont archivés sous forme comprimée, en particulier à la manière d'une compression de longueur de trajet.

13. Procédé selon la revendication 12, **caractérisé en ce que** seuls les codes de la première et de la dernière unité d'emballage sont archivés.

14. Système de marquage d'unités d'emballage de cigarettes avec un codage sous forme cryptée, **caractérisé par**
un dispositif pour la formation de chaque codage pour une unité d'emballage (par exemple, un carton) de telle sorte que le codage reproduit un codage d'au moins une unité d'emballage plus petite (paquet de cigarettes et/ou cartouche) contenue dans l'unité d'emballage, et
un dispositif pour l'application d'un codage à chaque niveau d'emballage.

15. Système selon la revendication 14, **caractérisé en ce que** le dispositif pour l'application du codage sur les paquets est disposé directement en amont de l'empaqueteuse de cartouches.

16. Système selon les revendications 14 et 15, **caractérisé en ce qu'**un dispositif de lecture des codages des cartouches est agencé devant l'empaqueteuse de cartons.

17. Système selon l'une quelconque des revendications 14 à 16, **caractérisé en ce qu'**un dispositif de lecture des codages des cartons est agencé devant l'empaqueteuse de palettes.
